# EUROPÄISCHE PATENTANMELDUNG

(11) **EP 4 663 432 A1**
(43) Veröffentlichungstag der Anmeldung: **17.12.2025**
(21) Anmeldenummer: 25178792.5
(22) Anmeldetag: 26.05.2025
(51) Int. Cl.: B60C 11/13, B60C 11/03

(54) **LAUFSTREIFEN MIT EINEM EINEN SPEZIELLEN VORSPRUNGVERLAUF AUFWEISENDEN VORSPRUNG**

(30) Priorität: 11.06.2024 DE 102024205364
(71) Anmelder: Continental Reifen Deutschland GmbH, 30175 Hannover (DE)
(72) Erfinder: Berger, Christoph, 30175 Hannover (DE); Seng, Matthias, 30175 Hannover (DE); Wiese, Klaus, 30175 Hannover (DE)
(74) Vertreter: Continental Corporation

(57) **Zusammenfassung**

Laufstreifen (2) für einen Fahrzeugreifen (1), wobei in dem Laufstreifen (2) wenigstens eine radial unterhalb einer Basisfläche (3) verlaufende Profilrille (4) mit einer Rillenflanke (5) und wenigstens ein radial oberhalb der Basisfläche (3) verlaufender Vorsprung (6) ausgebildet sind, wobei der Vorsprung (6) einem zusammenhängenden Vorsprungverlauf auf der Basisfläche (3) folgt, wobei die Länge des Vorsprungverlaufs groß gegenüber den Ausdehnungen eines Querschnitts des Vorsprungs (6) in senkrecht auf dem Vorsprungverlauf stehenden Ebenen ist.

Der Vorsprungverlauf weist einen variablen Abstand (D1, D2, D3) zu einer Schnittlinie (7) zwischen der Rillenflanke (5) und der Basisfläche (1) auf, wobei ein minimaler Abstand zwischen dem Vorsprungverlauf und der Schnittlinie (7) nicht größer als 0,5 mm ist.

## Beschreibung

Laufstreifen für einen Fahrzeugreifen, wobei in dem Laufstreifen wenigstens eine radial unterhalb einer Basisfläche verlaufende Profilrille mit einer Rillenflanke und wenigstens ein radial oberhalb der Basisfläche verlaufender Vorsprung ausgebildet sind, wobei der Vorsprung einem zusammenhängenden Vorsprungverlauf auf der Basisfläche folgt, wobei die Länge des Vorsprungverlaufs groß gegenüber den Ausdehnungen eines Querschnitts des Vorsprungs in senkrecht auf dem Vorsprungverlauf stehenden Ebenen ist.

Es ist an sich bekannt, Vorsprünge in Laufstreifen auszubilden. Insbesondere können Profilblöcke mit radial vorstehenden Kantenbereichen versehen werden, wobei letztere als Schneekanten einen Milling-Effekt erzielen und die Traktion auf Schnee verbessern können. Üblicherweise sind Schneekanten direkt an der Rillenflanke einer Profilrille bzw. am Rande eines Profilblocks ausgebildet oder weisen in geringem Abstand einen parallelen Verlauf zu diesen auf. Hierdurch kann in einer Richtung senkrecht zu dem Vorsprungverlauf ein besonders guter Schneegriff erzielt werden, wobei andererseits parallel zum Vorsprungverlauf kein signifikanter Vorteil erzielt wird.

Es ist weiterhin bekannt, Lamellen, auch bekannt als Feineinschnitte, in einem Laufstreifen auszubilden. Feineinschnitte unterscheiden sich von Profilrillen durch eine geringere Breite, üblicherweise < 2 mm. Lamellen können zur Entwässerung beitragen und zusätzliche Kanten im Profil des Laufstreifens schaffen, was die Nassbremseigenschafften verbessern kann. Zudem tragen Lamellen zu verbesserten Wintereigenschaften des Laufstreifens bei. Auf der anderen Seite können Feineinschnitte den Laufstreifen lokal weicher machen und diesen destabilisieren. Dieser Effekt kann durch eine der Lamelle benachbarte Schneekante noch verstärkt werden, wenn die Schneekante als Hebel für Kontaktkräfte zwischen dem Fahrbahnuntergrund und einem durch die Lamelle abgetrennten Gummiblock wirkt. Dies kann insbesondere der Fall sein, wenn der Feineinschnitt einem ungeraden Verlauf (wie z.B. einem Sinusverlauf) folgt, wobei lokal besonders geringe Abstände zwischen dem Feineinschnitt und einer Profilblockkante mit Schneekante entstehen können.

Der Erfindung liegt die Aufgabe zugrunde, die vorteilhaften Eigenschaften einer Schneekante weiter zu optimieren und auszuweiten. Insbesondere soll auch eine Kombinierbarkeit mit verschiedenartigen Lamellenverläufen verbessert werden.

Die Aufgabe wird erfindungsgemäß dadurch gelöst, dass der Vorsprungverlauf einen variablen Abstand zu einer Schnittlinie zwischen der Rillenflanke und der Basisfläche aufweist, wobei ein minimaler Abstand zwischen dem Vorsprung und der Schnittlinie nicht größer als 0,5 mm ist.

Die Erfindung erkennt, dass mit einem zur Blockkante nichtparallelen Vorsprungverlauf eine stabilere Schneekante geschaffen werden kann. Weiterhin kann insbesondere bei sowohl in Axial- als auch in Umfangsrichtung verlaufenden Richtungsanteilen des Vorsprungverlaufs neben der Traktion beim Anfahren und Bremsen auch ein verbessertes Seitenführungsverhalten erzielt werden. Als besonderen Vorteil erkennt die Erfindung darüber hinaus auch das Potential einer Kombination mit Lamellenverläufen, die ebenfalls einen variablen Abstand zu einer Blockkante aufweisen; insbesondere kann mehr Flexibilität in der Gestaltung und Platzierung der Lamellen bei weiterhin hoher Stabilität des Laufstreifens geschaffen werden.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

Ein Abstand zwischen zwei Linienverläufen kann an jedem Punkt eines ersten Linienverlaufs, beispielsweise entlang des Vorsprungs, als jeweils kürzester Abstand zu einem zweiten Linienverlauf, beispielswiese zu der Schnittlinie, ermittelt werden. Ein minimaler Abstand zwischen den beiden Linienverläufen ist der kleinste der kürzesten Abstände und kann an einem oder mehreren Punkten des ersten Linienverlaufs vorliegen. Der minimale Abstand zwischen dem Vorsprung und der Schnittlinie wird zwischen einer der Schnittlinie zugewandten Seite des Vorsprungs und der Schnittlinie ermittelt. Der minimale Abstand kann auch 0 mm betragen

Der Vorsprung kann sich in einer senkrecht auf dem Vorsprungverlauf stehenden Ebene in der Radialrichtung in einem Bereich zwischen 0,2 mm und 1 mm, vorzugsweise zwischen 0,3 mm und 0,7 mm über der Basisfläche erheben. Der Vorsprung kann in der senkrecht auf dem Vorsprungverlauf stehenden Ebene senkrecht zur Radialrichtung eine Breite in einem Bereich zwischen 0,2 mm und 1 mm, vorzugsweise zwischen 0,3 mm und 0,7 mm annehmen. Der Vorsprung kann in der senkrecht auf dem Vorsprungverlauf stehenden Ebene eine rechteckige Form annehmen.

Der Vorsprung kann wenigstens entlang eines ersten Teilabschnitts des Vorsprungverlaufs parallel zu der Schnittlinie verlaufen. Der erste Teilabschnitt kann eine Länge in einem Bereich zwischen 1 mm und 4 mm aufweisen. Der Vorsprung kann mehrere erste Teilabschnitte mit unterschiedlichen Abständen von der Schnittlinie umfassen. Die ersten Teilabschnitte können einander in ihrer Länge gleichen oder sich unterscheiden. Auf diese Weise wird die erfindungsgemäße Idee des variablen Abstands auf eine besonders einfache und gut umsetzbare Weise gelöst.

Zwei erste Teilabschnitte mit unterschiedlichen Abständen von der Schnittlinie können durch einen Vorsprungverbindungsabschnitt mit zu der Schnittlinie nicht parallelem Verlauf verbunden sein. Der Vorsprungverbindungsabschnitt kann, zumindest an den Verbindungspunkten zu den zwei ersten Teilabschnitten, senkrecht zu den ersten Teilabschnitten verlaufen. Auf diese Weise können um 90° gegeneinander verdrehte Abschnitte des Vorsprungverlaufs geschaffen werden, sodass in alle erdenklichen Richtungen ein verbesserter Griff des Reifens erzielbar ist. Alternativ kann der Vorsprungverbindungsabschnitt schräg zu den ersten Teilabschnitten verlaufen, wobei die Steigung entweder entlang oder entgegen dem Vorsprungverlauf ausgerichtet sein kann, sodass sich ein rampenförmiger Verlauf oder ein z- bzw. blitzförmiger Verlauf ergibt. Auf diese Weise kann der Vorsprungverlauf in Hinsicht auf den Griff des Laufstreifens und in Hinsicht auf Profilmerkmale in der Umgebung des Vorsprungverlaufs feinangepasst werden.

Alternativ oder zusätzlich kann der Vorsprung wenigstens entlang eines zweiten Teilabschnitts des Vorsprungverlaufs nichtparallel zu der Schnittlinie verlaufen. Dies kann beispielsweise mit einer geschwungenen oder gebogenen Schnittlinie in Kombination mit einem geradlinigen Vorsprungverlauf erzielt werden. Alternativ kann die Schnittlinie geradlinig verlaufen und der zweite Teilabschnitt des Vorsprungverlaufs kann schräg zur Schnittlinie, gebogen oder geschwungen verlaufen. Gemäß einer bevorzugten Ausführungsform folgt der zweite Teilabschnitt einem geschwungenen und/oder zickzackförmigen Verlauf. Auf diese Weise kann dem Vorsprung eine besondere Stabilität gegenüber aus unterschiedlichen Richtungen wirkenden Kräften verliehen werden. Zusätzlich kann bei variablen Seiten- und Traktionskraftvektoren eine orthogonale Angriffsfläche angeboten werden.

Gemäß einer bevorzugten Ausführungsform ist wenigstens ein Feineinschnitt in dem Laufstreifen ausgebildet, wobei der Feineinschnitt einem zusammenhängenden Einschnittverlauf auf der Basisfläche folgt und einen minimalen Abstand von weniger als 15 mm zu der Schnittlinie zwischen der Rillenflanke und der Basisfläche aufweist. Der minimale Abstand wird zwischen einer der Schnittlinie zugewandten Kante des Feineinschnitts und der Schnittlinie gemessen. Der Feineinschnitt verläuft also in der Nähe der Schnittlinie bzw. der Profilrille und damit auch in der Nähe des Vorsprungs, sodass eine vorteilhafte Feinabstimmung des Arrangements dieser Profilmerkmale auf dem Laufstreifen von besonderer Bedeutung für eine funktionale Wechselwirkung der Profilmerkmale und die Performance des Laufstreifens insgesamt ist.

Der Feineinschnitt kann wenigstens entlang eines ersten Einschnittabschnitts parallel zu der Schnittlinie verlaufen. Alternativ oder zusätzlich kann der erste Einschnittabschitt vollständig oder abschnittsweise parallel zu einem ersten Teilabschnitt des Vorsprungs verlaufen. Auf diese Weise lassen sich die Profilmerkmale auf besonders effiziente Weise nebeneinander anordnen.

Der Feineinschnitt kann mehrere erste Einschnittabschnitte mit unterschiedlichen Abständen von der Schnittlinie umfassen. Zwei benachbarte erste Einschnittabschnitte weisen vorzugsweise Abstände zu der Schnittlinie mit mehr als 0,2 mm Differenz untereinander auf. Dies gewährleistet einen merklichen Effekt der Erfindung und erleichtert zudem die Herstellung eines Laufstreifens mit entsprechendem Vorsprung. Entlang des Einschnittverlaufs bzw. des Vorsprungverlaufs kann sich der Abstand des Einschnitts von der Schnittlinie qualitativ oder quantitativ gleichlaufend zu dem Abstand des Vorsprungverlaufs von der Schnittlinie entwickeln. Auf diese Weise lässt sich die Stabilität des Laufstreifens vergleichmäßigen.

Zwei erste Einschnittabschnitte mit unterschiedlichen Abständen von der Schnittlinie können durch einen Einschnittverbindungsabschnitt mit zu der Schnittlinie nicht parallelem Verlauf verbunden sein. Zwei erste Einschnittabschnitte mit gleichem Abstand zu der Schnittlinie können zu gegenüberliegenden Enden eines dritten Einschnittabschnitts angeordnet sein, wobei der dritte Einschnittabschnitt einen anderen Abstand zu der Schnittlinie aufweist als die zwei ersten Einschnittabschnitte. Die zwei ersten Einschnittabschnitte können durch Einschnittverbindungsabschnitte mit dem dritten Einschnittabschnitt verbunden sein, wobei die drei genannten Einschnittabschnitte und die zwei Einschnittverbindungsabschnitte gemeinsam den Verlauf einer Trapezlamelle annehmen können. Die Erfindung ist dazu geeignet, die ungleichmäßige Steifigkeit des Laufsteifens in der Umgebung einer nahe einer Profilrille angeordneten Trapezlamelle durch einen geeignet angepassten Vorsprungverlaufs auszugleichen bzw. abzuschwächen.

Der Feineinschnitt kann wenigstens entlang eines zweiten Einschnittabschnitts parallel zu dem Vorsprung verlaufen. Wenn der Vorsprung wenigstens abschnittsweise parallel zu der Schnittlinie verläuft, kann ein zweiter Einschnittabschnitt auch gleichzeitig ein erster Einschnittabschnitt sein, also ebenfalls parallel zu der Schnittlinie verlaufen. In einer Ausführungsform der Erfindung nehmen sowohl der Vorsprung als auch der Einschnitt zumindest abschnittsweise einen geschwungenen und/oder zickzackförmigen Verlauf an, wobei sich die beiden Verläufe in Amplitude und Wellenlänge im Wesentlichen gleichen können, sodass sich zueinander parallele Verläufe ergeben.

Es können mehrere nicht zusammenhängende Feineinschnitte, jeweils mit minimalen Abständen von weniger als 15 mm zu der Schnittlinie zwischen der Rillenflanke und der Basisfläche, in dem Laufstreifen ausgebildet sein. Hierbei kann es sich um mit Unterbrechungen in einer Linie angeordnete Feineinschnitte handeln. Alternativ oder zusätzlich können auch, aus Sicht der Schnittlinie, auf beiden Seiten des Vorsprungs angeordnete Feineinschnitte vorgesehen werden, wobei ein Feineinschnitt zwischen der Schnittlinie und dem Vorsprung und ein Feineinschnitt jenseits des Vorsprungs angeordnet sein kann.

Die Profilrille kann eine Quer- oder Schrägrille sein. In diesem Fall verläuft die Schnittlinie in Axialrichtung oder weist zumindest einen Richtungsanteil in Axialrichtung auf. Die an solchen Schnittlinien anliegenden Bereiche eines Laufstreifens bieten besonders vorteilhafte Anordnungsmöglichkeiten für Vorsprünge. Dies liegt daran, dass insbesondere eine im Wesentlichen in Axialrichtung verlaufende Schneekante einem Reifen zusätzlichen Schneegriff beim Bremsen und/oder Anfahren verleihen kann.

Der Vorsprung kann auf einem Profilblock angeordnet sein und sich vorzugsweise entlang eines Großteils einer Breite des Profilblocks erstrecken. Auf diese Weise kann einem Profilblock der bestmögliche Griff bei guter Stabilität verliehen werden.

Die Erfindung betrifft außerdem einen Fahrzeugreifen, umfassend einen vor- und/oder nachstehend beschriebenen Laufstreifen.

Die Erfindung betrifft auch eine Reifenform zur Herstellung eines erfindungsgemäßen Laufstreifens und/oder Fahrzeugreifens.

Der Laufstreifen kann mit weiteren Merkmalen fortgebildet werden, die im Zusammenhang mit dem erfindungsgemäßen Fahrzeugreifen und/oder der erfindungsgemäßen Reifenform beschrieben sind. Der Fahrzeugreifen kann mit weiteren Merkmalen fortgebildet werden, die im Zusammenhang mit dem erfindungsgemäßen Laufstreifen und/oder der erfindungsgemäßen Reifenform beschrieben sind. Die Reifenform kann mit weiteren Merkmalen fortgebildet werden, die im Zusammenhang mit dem erfindungsgemäßen Laufstreifen und/oder dem erfindungsgemäßen Fahrzeugreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine seitliche Ansicht einer Ausführungsform eines erfindungsgemäßen Fahrzeugreifens,
Figur 2 schematisch und ausschnittsweise eine Draufsicht auf eine Ausführungsführungsform eines erfindungsgemäßen Laufstreifens,
Figur 3 schematisch eine Schnittansicht gemäß der Linie III-III in Figur 2,
Figur 4 schematisch eine Draufsicht auf einen Profilblock in einer ersten Ausführungsform eines erfindungsgemäßen Laufstreifens,
Figur 5 schematisch eine Draufsicht auf einen Profilblock in einer zweiten Ausführungsform eines erfindungsgemäßen Laufstreifens,
Figur 6 schematisch eine Draufsicht auf einen Profilblock in einer dritten Ausführungsform eines erfindungsgemäßen Laufstreifens,
Figur 7 schematisch eine Draufsicht auf einen Profilblock in einer vierten Ausführungsform eines erfindungsgemäßen Laufstreifens,
Figur 8 schematisch eine Draufsicht auf einen Profilblock in einer fünften Ausführungsform eines erfindungsgemäßen Laufstreifens,
Figur 9 schematisch eine Draufsicht auf einen Profilblock in einer sechsten Ausführungsform eines erfindungsgemäßen Laufstreifens,
Figur 10 schematisch eine Draufsicht auf einen Profilblock in einer siebten Ausführungsform eines erfindungsgemäßen Laufstreifens.

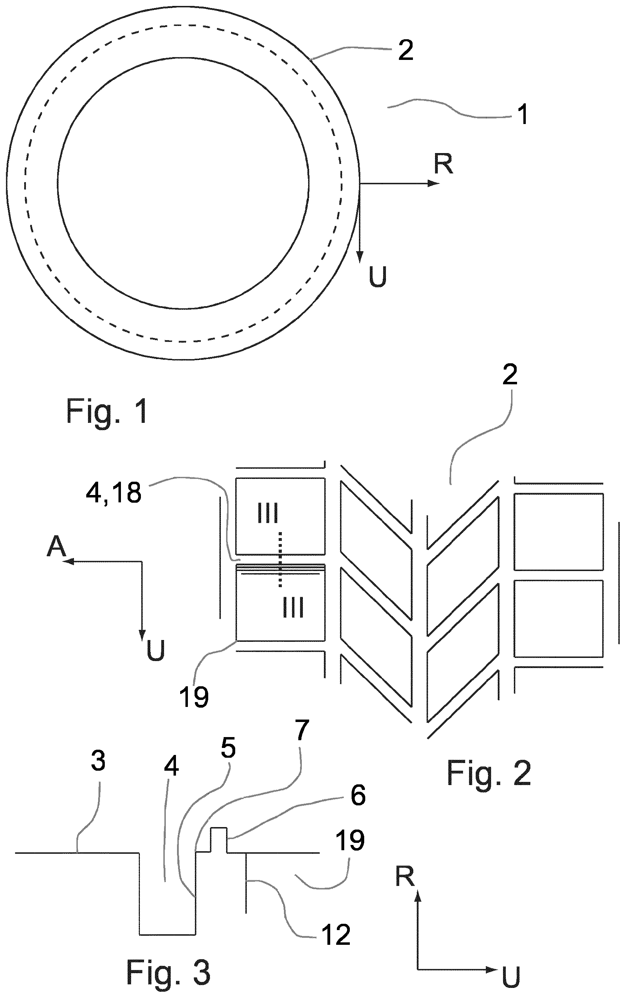

Figur 1 zeigt schematisch eine seitliche Ansicht einer Ausführungsform eines erfindungsgemäßen Fahrzeugreifens 1. Die Radialrichtung R und die Umfangsrichtung U sind mit Pfeilen gekennzeichnet. Radial außen an dem Reifen 1 ist eine Ausführungsform eines erfindungsgemäßen Laufstreifens 2 angeordnet.

Figur 2 zeigt schematisch und ausschnittsweise eine Draufsicht auf eine Ausführungsführungsform eines erfindungsgemäßen Laufstreifens 2. Die Axialrichtung A und die Umfangsrichtung U sind mit Pfeilen gekennzeichnet. Der Laufstreifen 2 ist durch mehrere Profilrillen 4 in Profilblöcke 19 unterteilt. Links in der Zeichnung ist eine Querrille 18 gekennzeichnet. Der Verlauf eines Schnitts III-III durch diese Querrille 18 ist mit einer gestrichelten Linie gekennzeichnet.

Figur 3 zeigt schematisch eine Schnittansicht gemäß der Linie III-III in Figur 2. Die Radialrichtung R und die Umfangsrichtung U sind mit Pfeilen gekennzeichnet. In der Mitte der Zeichnung ist die Querrille 18, bzw. allgemeiner die Profilrille 4 als Vertiefung zu erkennen, die unterhalb der Basisfläche 3 ausgebildet ist. Links und rechts ist die Profilrille von Profilblöcken 19 begrenzt. Der Querschnitt der Profilrille 4 ist stark vereinfacht als Rechteck dargestellt; alternativ können V-förmige, U-förmige oder anderweitig geformte Rillenprofile in einem erfindungsgemäßen Laufstreifen 2 ausgebildet sein. Die Profilrille 4 weist eine Rillenflanke 5 auf, welche an einer Schnittlinie 7 auf die Basisfläche 3 trifft. Nahe der Schnittlinie 7 erhebt sich ein Vorsprung 6 über der Basisfläche 3, wobei der Vorsprung 6 in dem gezeigten Beispiel einen rechteckigen Querschnitt hat. Der Querschnitt des Vorsprungs 6 kann alternativ abgeschrägte oder abgerundete Kanten aufweisen und kann von dem in Figur 3 gezeigten Vorsprung 6 abweichende Proportionen und/oder Abmaße haben. Erfindungsgemäße Längsverläufe des Vorsprungs 6 werden anhand der nachfolgenden Figuren illustriert. Von der Schnittlinie 7 aus betrachtet jenseitig des Vorsprungs 6 ist ein Feineinschnitt 12 in dem Profilblock 19 ausgebildet. Der Feineinschnitt 12 ist schematisch als Linie dargestellt, kann aber auch etwas breiter ausgestaltet werden, als die Dicke der Linie suggeriert.

Mögliche Längsverläufe des Feineinschnitts 12 werden anhand einiger der nachfolgenden Figuren illustriert.

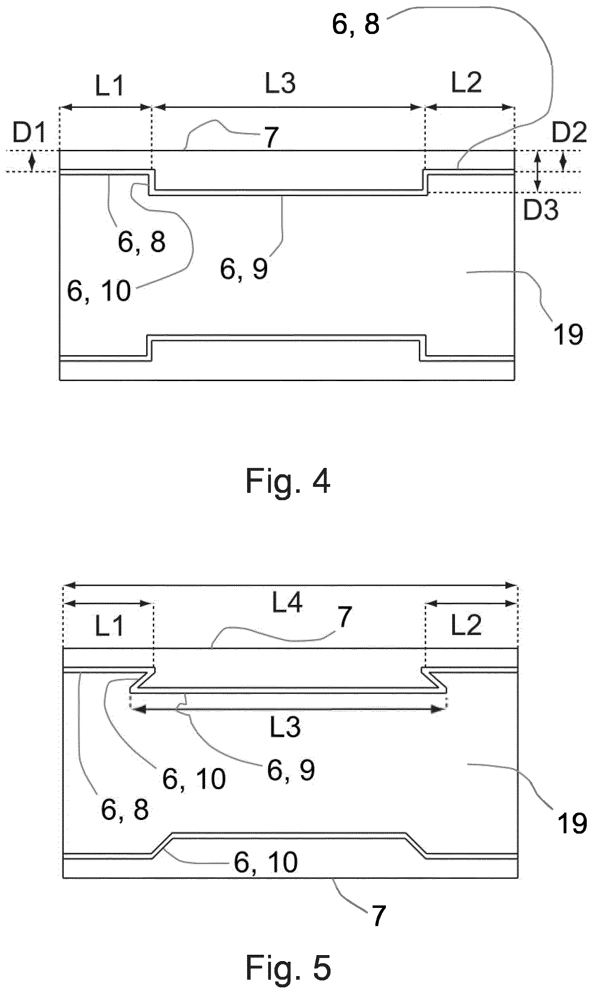

Figur 4 zeigt schematisch eine Draufsicht auf einen Profilblock 19 in einer ersten Ausführungsform eines erfindungsgemäßen Laufstreifens 2. Der dargestellte Profilblock 19 ist rechteckig, könnte aber auch andere, insbesondere polygonale Formen annehmen; dies gilt für alle Ausführungsformen, insbesondere auch jene gemäß den Figuren 5 bis 10. Oben in Figur 4 ist die Schnittlinie 7 zwischen der Basisfläche 3 und einer dort an den Profilblock 19 angrenzenden Rillenflanke 5 gekennzeichnet. Der dargestellte Vorsprung 6 erstreckt sich über die gesamte Breite des Profilblocks 19, könnte aber auch lediglich entlang von Teilen dieser Breite ausgebildet sein; dies gilt für alle Ausführungsformen, insbesondere auch jene gemäß den Figuren 5 bis 10. Der Vorsprung 6 gemäß Figur 4 weist drei Teilabschnitte 8, 9 auf, die jeweils parallel zu der Schnittlinie 7 verlaufen. Die Längserstreckung eines jeweiligen Teilabschnitts 8, 9 entlang der Breite des Profilblocks 19 ist mit Pfeilen und den Bezeichnungen L1, L2, L3 gekennzeichnet, der Abstand von der Schnittlinie ist mit D1, D2, D3 gekennzeichnet. Gemäß Figur 4 gilt L3 > L1, L3 > L2 und L1 = L2. Alternativ können eines, oder mehrere der Längserstreckungsverhältnisse der L1, L2, L3 untereinander durch beliebige andere Beziehungen <, >, = gekennzeichnet sein; dies gilt für alle Ausführungsformen, insbesondere auch jene gemäß den Figuren 5 bis 10. Gemäß

Figur 4 gilt D3 > D1, D3 > D2 und D1 = D2. Alternativ können eines, oder mehrere der Abstandsverhältnisse der D1, D2, D3 untereinander durch beliebige andere Beziehungen <, >, = gekennzeichnet sein; dies gilt für alle Ausführungsformen, insbesondere auch jene gemäß den Figuren 5 bis 10. In einer bevorzugten Ausführungsform gilt D3 - D2 > 0,2 mm und D3 - D1 > 0,2 mm. Die im Profilblock 19 außen angeordneten ersten Teilabschnitte 8 sind mit dem zwischen diesen angeordneten ersten Teilabschnitt 9 über Einschnittverbindungsabschnitte 10 verbunden, die gemäß dem in Figur 4 gezeigten Beispiel senkrecht zu den Teilabschnitten 8, 9 sowie senkrecht zu der Schnittlinie 7 verlaufen.

Figur 5 zeigt schematisch eine Draufsicht auf einen Profilblock 19 in einer zweiten Ausführungsform eines erfindungsgemäßen Laufstreifens 2. Die Ausführungsform gleicht in vielen Punkten der in Figur 4 gezeigten. Abweichend von dieser verlaufen die Einschnittverbindungsabschitte 10 jedoch nicht senkrecht zu den Teilabschnitten 8, 9 und der Schnittlinie 7. Bei dem in der Zeichnung oben angeordneten Versprung 6 ergibt sich dadurch ein z- bzw. blitzförmiger Verlauf; in diesem Zusammenhang gilt auch die Ungleichung L1 + L2 > L4 - L3, wobei L4 die Breite des Profilblocks 19 bzw. die gesamte Längserstreckung des Vorsprungs 6 bezeichnet. Bei dem in der Zeichnung unten angeordneten Vorsprung 6 ergibt sich durch die Schrägstellung der Einschnittverbindungsabschnitte ein rampenförmiger bzw. trapezförmiger Verlauf des Vorsprung 6; in diesem Zusammenhang gilt auch die Ungleichung L1 + L2 < L4 - L3.

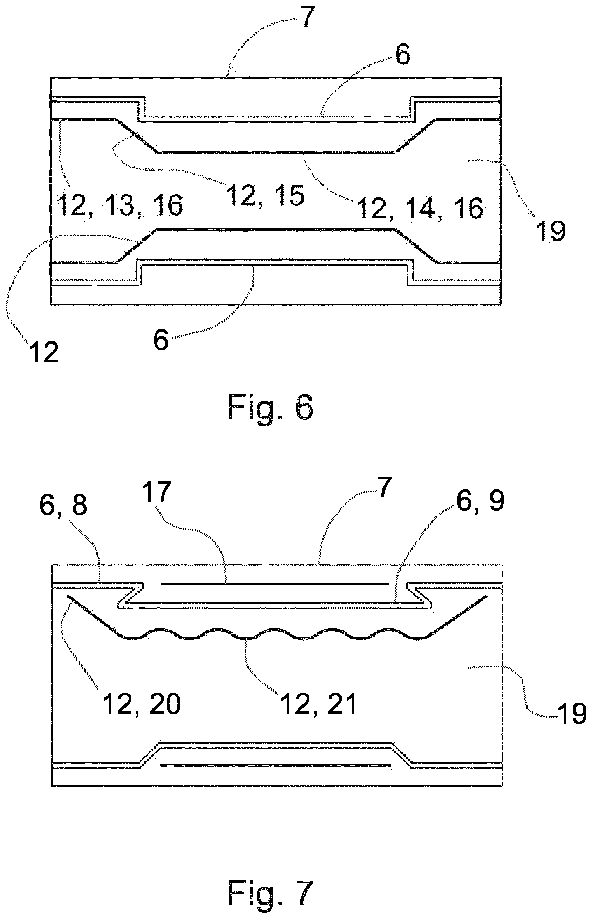

Figur 6 zeigt schematisch eine Draufsicht auf einen Profilblock 19 in einer dritten Ausführungsform eines erfindungsgemäßen Laufstreifens 2. In Bezug auf die Vorsprünge 6 ähnelt die Ausführungsform der in Figur 4 gezeigten. Zusätzlich sind Feineinschnitte 12 in dem Profilblock 19 ausgeprägt. Die Feineinschnitte 12 umfassen erste Einschnittabschnitte 13, 14, die jeweils parallel zu der Schnittlinie 7 verlaufen. Die ersten Einschnittabschnitte 13, 14 sind durch

Einschnittverbindungsabschnitte 15 miteinander verbunden. In dem in Figur 6 gezeigten Ausführungsbeispiel ergibt sich dadurch die Form einer Trapezlamelle. Die Trapezlamelle läuft qualitativ dem Verlauf des Vorsprungs 6 gleich, wobei weiter von der Schnittlinie 7 beabstandete Teilabschnitte des Vorsprungs 6 und Einschnittabschitte 14 sowie näher an der Schnittlinie 7 gelegene Teilabschnitte des Vorsprungs 6 und Einschnittabschitte 13 jeweils parallel und nebeneinander angeordnet sind. Die ersten Einschnittabschnitte 13, 14 sind zugleich zweite Einschittabschnitte 16 im Sinne der vorliegenden Patentschrift, insofern sie parallel zu dem Vorsprung 6 verlaufen.

Figur 7 zeigt schematisch eine Draufsicht auf einen Profilblock 19 in einer vierten Ausführungsform eines erfindungsgemäßen Laufstreifens 2. Die Ausführungsform ähnelt in Bezug auf die Vorsprünge 6 der in Figur 5 gezeigten. Zusätzlich sind Feineinschnitte 12, 17 in dem Profilblock 19 ausgebildet. Der Feineinschnitt 17 ist von der Schnittlinie 7 aus betrachtet diesseitig des Vorsprungs 6 angeordnet. Der Platz hierfür wird durch das Zurückweichen des mittleren, ersten Teilabschnitts 9 des Vorsprungs 6 geschaffen. Der Feineinschnitt 12 weist einen wellenförmigen Einschnittabschnitt 21 auf, der weder zu der Schnittlinie 7 noch zu dem Vorsprung 6 parallel verläuft. Die äußeren Enden 20 des Feineinschnitts 12 reichen auf einen Abstand zur Schnittlinie 7 heran, der geringer ist als der Abstand des mittleren, ersten Teilabschnitts 9 des Vorsprungs 6 von der Schnittlinie 7. Hierdurch entsteht eine hohe Dichte an Profilmerkmalen bei einem trotzdem noch hinreichend stabilen Profilblock.

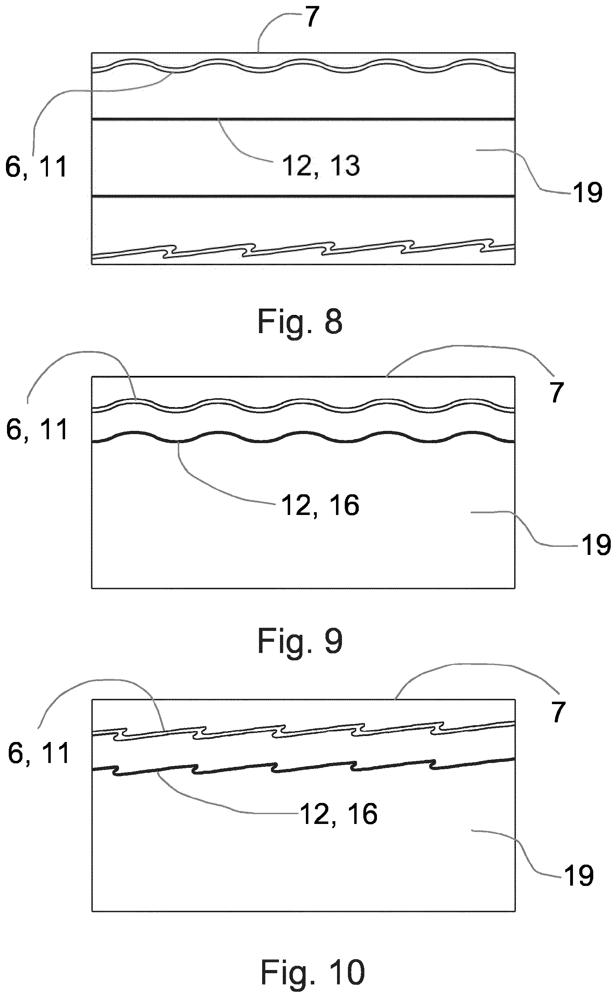

Figur 8 zeigt schematisch eine Draufsicht auf einen Profilblock 19 in einer fünften Ausführungsform eines erfindungsgemäßen Laufstreifens 2. Gemäß dieser Ausführungsform weisen die Vorsprünge 6 wellenförmige Längsverläufe auf. Dies wird gemäß Figur 8 mit parallel zu der Schnittlinie 7 verlaufenden Feineinschnitten 12 kombiniert.

Figur 9 zeigt schematisch eine Draufsicht auf einen Profilblock 19 in einer sechsten Ausführungsform eines erfindungsgemäßen Laufstreifens 2. Hierbei wird ein wellenförmiger Vorsprung 6 mit einem ebenfalls wellenförmigen Feineinschnitt 12 kombiniert, sodass die beiden Profilmerkmale einen parallelen Verlauf zueinander aufweisen. Alternativ zu der spezifischen Ausführungsform gemäß Figur 9 können sich insbesondere die Amplituden der Längsverläufe des Vorsprungs 6 und des Feineinschnitts 12 auch voneinander unterscheiden.

Figur 10 zeigt schematisch eine Draufsicht auf einen Profilblock 19 in einer siebten Ausführungsform eines erfindungsgemäßen Laufstreifens 2. Die Ausführungsform ähnelt der in Figur 9 gezeigten, wobei die wellenförmigen Verläufe eine weniger symmetrische Form aufweisen.

### Bezugszeichenliste

- 1: Fahrzeugreifen
- 2: Laufstreifen
- 3: Basisfläche
- 4: Profilrille
- 5: Rillenflanke
- 6: Vorsprung
- 7: Schnittlinie
- 8: erster Teilabschnitt
- 9: erster Teilabschnitt
- 10: Vorsprungverbindungsabschnitt
- 11: zweiter Teilabschnitt
- 12: Feineinschnitt
- 13: erster Einschnittabschnitt
- 14: erster Einschnittabschnitt
- 15: Einschnittverbindungsabschnitt
- 16: zweiter Einschnittabschnitt
- 17: Feineinschnitt
- 18: Quer- oder Schrägrille
- 19: Profilblock
- 20: äußeres Ende des Feineinschnitts
- 21: weiterer Einschnittabschnitt

## Patentansprüche

1. Laufstreifen (2) für einen Fahrzeugreifen (1), wobei in dem Laufstreifen (2) wenigstens eine radial unterhalb einer Basisfläche (3) verlaufende Profilrille (4) mit einer Rillenflanke (5) und wenigstens ein radial oberhalb der Basisfläche (3) verlaufender Vorsprung (6) ausgebildet sind, wobei der Vorsprung (6) einem zusammenhängenden Vorsprungverlauf auf der Basisfläche (3) folgt, wobei die Länge des Vorsprungverlaufs groß gegenüber den Ausdehnungen eines Querschnitts des Vorsprungs (6) in senkrecht auf dem Vorsprungverlauf stehenden Ebenen ist,
**dadurch gekennzeichnet,**
**dass** der Vorsprungverlauf einen variablen Abstand (D1, D2, D3) zu einer Schnittlinie (7) zwischen der Rillenflanke (5) und der Basisfläche (3) aufweist, wobei ein minimaler Abstand zwischen dem Vorsprung und der Schnittlinie (7) nicht größer als 0,5 mm ist.

2. Laufstreifen (2) gemäß Anspruch 1, **dadurch gekennzeichnet, dass** der Vorsprung (6) wenigstens entlang eines ersten Teilabschnitts (8) des Vorsprungverlaufs parallel zu der Schnittlinie (7) verläuft.

3. Laufstreifen (2) gemäß Anspruch 2, **dadurch gekennzeichnet, dass** der Vorsprung (6) mehrere erste Teilabschnitte (8, 9) mit unterschiedlichen Abständen (D1, D3) von der Schnittlinie (7) umfasst.

4. Laufstreifen (2) gemäß Anspruch 3, **dadurch gekennzeichnet, dass** zwei erste Teilabschnitte (8, 9) mit unterschiedlichen Abständen (D1, D3) von der Schnittlinie (7) durch einen Vorsprungverbindungsabschnitt (10) mit zu der Schnittlinie (7) nicht parallelem Verlauf verbunden sind.

5. Laufstreifen (2) gemäß einem der Ansprüche 1 bis 4, **dadurch gekennzeichnet, dass** der Vorsprung (6) wenigstens entlang eines zweiten Teilabschnitts (11) des Vorsprungverlaufs nichtparallel zu der Schnittlinie (7) verläuft.

6. Laufstreifen (2) gemäß Anspruch 5, **dadurch gekennzeichnet, dass** der zweite Teilabschnitt (11) einem geschwungenen und/oder zickzackförmigen Verlauf folgt.

7. Laufstreifen (2) gemäß einem der Ansprüche 1 bis 6, **dadurch gekennzeichnet, dass** wenigstens ein Feineinschnitt (12) in dem Laufstreifen (2) ausgebildet ist, wobei der Feineinschnitt (12) einem zusammenhängenden Einschnittverlauf auf der Basisfläche (3) folgt und einen minimalen Abstand von weniger als 15 mm zu der Schnittlinie (7) zwischen der Rillenflanke (5) und der Basisfläche (3) aufweist.

8. Laufstreifen (2) gemäß Anspruch 7, **dadurch gekennzeichnet, dass** der Feineinschnitt (12) wenigstens entlang eines ersten Einschnittabschnitts (13) parallel zu der Schnittlinie (7) verläuft.

9. Laufstreifen (2) gemäß Anspruch 8, **dadurch gekennzeichnet, dass** der Feineinschnitt (12) mehrere erste Einschnittabschnitte (13, 14) mit unterschiedlichen Abständen von der Schnittlinie (7) umfasst.

10. Laufstreifen (2) gemäß Anspruch 9, **dadurch gekennzeichnet, dass** zwei erste Einschnittabschnitte (13, 14) mit unterschiedlichen Abständen von der Schnittlinie (7) durch einen Einschnittverbindungsabschnitt (15) mit zu der Schnittlinie (7) nicht parallelem Verlauf verbunden sind.

11. Laufstreifen (2) gemäß einem der Ansprüche 7 bis 10, **dadurch gekennzeichnet, dass** der Feineinschnitt (12) wenigstens entlang eines zweiten Einschnittabschnitts (16) parallel zu dem Vorsprung (6) verläuft.

12. Laufstreifen (2) gemäß einem der Ansprüche 7 bis 11, **dadurch gekennzeichnet, dass** mehrere nicht zusammenhängende Feineinschnitte (12, 17), jeweils mit minimalen Abständen von weniger als 15 mm zu der Schnittlinie (7) zwischen der Rillenflanke (5) und der Basisfläche (3) in dem Laufstreifen (2) ausgebildet sind.

13. Laufstreifen (2) gemäß einem der Ansprüche 1 bis 12, **dadurch gekennzeichnet, dass** die Profilrille (4) eine Quer- oder Schrägrille (18) ist.

14. Laufstreifen (2) gemäß einem der Ansprüche 1 bis 13, **dadurch gekennzeichnet, dass** der Vorsprung (6) auf einem Profilblock (19) angeordnet ist und sich vorzugsweise entlang eines Großteils einer Breite des Profilblocks (19) erstreckt.

15. Fahrzeugreifen (1), umfassend einen Laufstreifen (2) gemäß einem der Ansprüche 1 bis 14.
